# EUROPÄISCHE PATENTSCHRIFT

(11) **EP 2 850 672 B1**
(45) Veröffentlichungstag und Bekanntmachung des Hinweises auf die Patenterteilung: **31.03.2021**
(21) Anmeldenummer: 13716777.1
(22) Anmeldetag: 12.04.2013
(51) Int. Cl.: H01M 2/10, H01M 2/02, H01M 6/50, H01M 10/6556, H01M 10/6554, H01M 10/647

(54) **BATTERIEBAUGRUPPE**
BATTERY ASSEMBLY
ENSEMBLE BATTERIE

(30) Priorität: 16.05.2012 DE 102012208239
(43) Veröffentlichungstag der Anmeldung: 25.03.2015
(73) Patentinhaber: Robert Bosch GmbH, 70442 Stuttgart (DE)
(72) Erfinder: DUDZIAK, Sonja, 74321 Bietigheim-Bissingen (DE); KOBLER, Christof, 70469 Stuttgart (DE); RAMSAYER, Reiner, 71277 Rutesheim (DE)
(86) Internationale Anmeldenummer: PCT/EP2013/057683
(87) Internationale Veröffentlichungsnummer: WO 2013/171009

(56) Entgegenhaltungen:
- DE-A1-102008 010 838
- DE-A1-102010 029 872
- US-A1- 2011 045 334
- US-A1- 2011 151 305
- US-A1- 2012 115 003

## Beschreibung

### Stand der Technik

Die Erfindung betrifft eine Batteriebaugruppe nach dem Oberbegriff des Anspruchs 1.

Eine derartige Batteriebaugruppe ist aus der DE 10 2010 029 872 A1 bekannt. Sie ist dort für den Einsatz in einem Hybridfahrzeug vorgesehen und umfasst eine Vielzahl von miteinander mechanisch und elektrisch verbundenen, prismatischen Zellengehäusen, die jeweils einzelne Batteriezellen ausbilden. Insbesondere bei hohen Entladeströmen bzw. relativ hohen Außentemperaturen ist es erforderlich, die bei der Entladung der Batteriezellen entstehende Verlustwärme effektiv abzuführen, um eine thermische Überlastung bzw. Beschädigung der Batteriezellen zu vermeiden. Dazu ist es aus der genannten Schrift bekannt, die Zellengehäuse mit ihren einer Kühlplatte zugewandten Zellenböden (möglichst) vollflächig in wärmeleitendem Kontakt mit der Kühlplatte anzuordnen. Dazu weisen die bekannten Zellengehäuse Fortsätze auf, die durch Durchbrüche an der Kühlplatte hindurchragen, und die durch Aufbringung einer axialen Zugkraft gegen die Kühlplatte verspannt werden. Hierzu sind insbesondere Spannelemente in Form von Kunststoffschienen vorgesehen, die mit nietartigen Fortsätzen der Befestigungsfortsätze zusammenwirken. Darüber hinaus ist es aus der genannten Schrift bekannt, dass zwischen den Zellenböden der Zellengehäuse und dem Kühlelement eine Zwischenschicht mit schlechten Wärmeleiteigenschaften vorgesehen sein kann. Damit soll der übertragbare Wärmestrom von den Batteriezellen zu dem Kühlelement beschränkt sowie ggf. vorhandene Maßtoleranzen zwischen den Batteriezellen und dem Kühlelement ausgeglichen werden.

Stand der Technik sind auch DE 10 2008 010838 A1, US 2011/045334 A1, US 2012/115003 A1, US 2011/151305 A1 und DE 10 2010 029872 A1.

### Offenbarung der Erfindung

Ausgehend von dem dargestellten Stand der Technik liegt der Erfindung die Aufgabe zugrunde, eine Batteriebaugruppe nach dem Oberbegriff des Anspruchs 1 derart weiterzubilden, dass eine verbesserte elektrische Isolierung der Batteriezellen zu dem Kühlelement ermöglicht wird. Diese Aufgabe wird erfindungsgemäß bei einer Batteriebaugruppe mit den kennzeichnenden Merkmalen des Anspruchs 1 dadurch gelöst, dass der Zellenboden, zusätzlich zu einer ggf. vorhandenen Beschichtung des Zellengehäuses und/oder des Kühlelements, gegenüber dem Kühlelement zusätzlich elektrisch isoliert ist. Durch das Vorsehen der erfindungsgemäß vorgesehenen zusätzlichen elektrischen Isolierung wird somit eine besonders sichere und zuverlässige elektrische Isolierung des Kühlelements zu den Zellengehäusen ermöglicht. Insbesondere können dadurch ggf. vorhandene Beschädigungen an den Zellen bzw. dem Kühlelement, beispielsweise durch eine qualitativ schlechte Beschichtung, ausgeglichen werden bzw. diese führen nicht dazu, dass die elektrischen Eigenschaften der Batteriebaugruppe negativ beeinträchtigt werden.

Neben einer möglichst guten Wärmeübertragung zwischen den Batteriezellen und dem Kühlelement ist es in der Praxis jedoch auch erforderlich, zusätzlich eine möglichst gute und zuverlässige elektrische Isolierung zwischen den Batteriezellen und dem Kühlelement auszubilden. Hierbei muss berücksichtigt werden, dass die Batteriezellen untereinander nur mit einer Isolierung in der Größenordnung der Zellenspannung (wenige Volt) isoliert werden müssen, die Isolierung der Batteriezelle zum Kühlelement jedoch in der Größenordnung der Batteriesystemspannung (mehrere 100 Volt) liegen muss. Nun ist es zwar an sich aus dem Stand der Technik bekannt, Zellengehäuse sowie Kühlelemente mit einer als elektrische Isolierung wirkenden Beschichtung auszubilden, jedoch insbesondere bei der erforderlichen elektrischen Isolierung der Batteriezellen zum Kühlelement, die in der Größenordnung von einigen 100 Volt liegen sollte, ist eine derartige Isolierung noch nicht optimiert.

Vorteilhafte Weiterbildungen der erfindungsgemäßen Batteriebaugruppe sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

In einer ersten grundsätzlichen Ausgestaltung der Erfindung wird vorgeschlagen, dass zwischen dem Zellenboden und dem Kühlelement ein separates, elektrisch nicht und thermisch gut leitendes erstes Isolierelement angeordnet ist. Bei einer derartigen Ausgestaltung der Erfindung wird neben der gewünschten elektrischen Isolierung gleichzeitig eine besonders gute Wärmeableitung ermöglicht.

In konkreter Ausgestaltung des ersten Isolierelements, bei der sich dieses relativ einfach herstellen lässt und die gewünschten elektrisch isolierenden und thermisch gut leitenden Eigenschaften aufweist, wird vorgeschlagen, dass das erste Isolierelement plattenförmig mit Durchbrüchen für den Befestigungsfortsatz ausgebildet ist und vorzugsweise aus Kunststoff oder Keramik besteht.

Eine mechanisch besonders stabile Batteriebaugruppe mit thermisch gut leitenden Eigenschaften, bei der zusätzlich hohe (elektrische) Isolationseigenschaften zwischen den Batteriezellen und dem Kühlelement ermöglicht werden, wird erzielt, wenn das Kühlelement aus Metall besteht, wenn der Befestigungsfortsatz und das Spannelement aus Metall bestehen, und wenn zwischen dem Befestigungsfortsatz und dem Kühlelement ein zweites Isolierelement angeordnet ist. Das zweite Isolierelement bewirkt dabei eine elektrische Isolierung zwischen dem Befestigungsfortsatz in dem Durchbruch des Kühlelements zum Kühlelement hin.

Ganz besonders bevorzugt ist es, wenn das zweite Isolierelement als Isolierbuchse ausgebildet ist und einen flanschförmig umlaufenden Rand aufweist, der zwischen dem Kühlelement und dem Spannelement angeordnet ist. Dadurch wird eine elektrische Isolierung zwischen dem Spannelement und dem Kühlelement ohne zusätzliche Bauteile ermöglicht.

Neben der bisher beschriebenen grundsätzlichen Möglichkeit, das Kühlelement insbesondere aus Metall zu fertigen, besteht darüber hinaus die Möglichkeit, in einer alternativen Ausgestaltung der Erfindung das Kühlelement aus thermisch gut leitendem Kunststoff auszubilden. Das Ausbilden des Kühlelements aus thermisch gut leitendem Kunststoff hat den Vorteil, dass bereits durch die Wahl des Materials elektrische Isolationseigenschaften erzielt werden, sodass sich üblicherweise zusätzliche Maßnahmen zur elektrischen Isolierung zwischen den Batteriezellen und dem Kühlelement erübrigen.

Um eine besonders gute Wärmeübertragung zwischen den Zellengehäusen der Batteriezellen und dem Kühlelement zu ermöglichen, wird dabei vorgeschlagen, dass das Kühlelement wenigstens eine, vorzugsweise zwei einstückig an einem Bodenbereich angeformte Seitenwände aufweist, die an wenigstens einer Seitenwand des Zellengehäuses flächig anliegt bzw. anliegen. Damit wird gegenüber einer Lösung, bei der lediglich der Zellenboden mit dem Kühlelement verbunden ist, eine größere Wärmeübertragungsfläche erzielt und es werden insbesondere auch lokale thermische Überlastungen der Batteriezellen vermieden.

Eine besonders gute bzw. sichere Anlage der Seitenwände an den entsprechenden Flächen des Zellengehäuses wird erzielt, wenn zwei Seitenwände vorgesehen sind und wenn das Kühlelement einen konischen Querschnitt aufweist.

Darüber hinaus lässt sich grundsätzlich eine verbesserte Wärmeabfuhr an dem Kühlelement erzielen, wenn in dem Kühlelement Kühlkanäle ausgebildet sind.

Eine besonders einfache Befestigung der Zellengehäuse der Batteriezellen ohne die Verwendung von speziell ausgebildeten Spannelementen wird erzielt, wenn der Befestigungsfortsatz ein Gewinde aufweist, das mit einer entsprechenden (standardisierten) Spannmutter zusammenwirkt.

Weitere Merkmale, Vorteile und Einzelheiten der Erfindung ergeben sich aus der nachfolgenden Beschreibung bevorzugter Ausführungsbeispiele sowie anhand der Zeichnung.

Diese zeigt in:
- Fig. 1: eine perspektivische Teilansicht auf eine erfindungsgemäße Batteriebaugruppe bei einer ersten Ausgestaltung der Erfindung in teilweise geschnittener Darstellung,
- Fig. 2: einen Längsschnitt durch die Batteriebaugruppe gemäß Fig. 1 im Bereich eines Befestigungsfortsatzes bei einer gegenüber der Fig. 1 abgewandelten Ausführung unter Verwendung einer Isolierbuchse und
- Fig.3: eine gegenüber Fig. 1 modifizierte Batteriebaugruppe unter Verwendung eines aus Kunststoff bestehenden, wannenartigen Kühlgehäuses in geschnittener perspektivischer Ansicht.

Gleiche Bauteile bzw. Bauteile mit gleicher Funktion sind in den Figuren mit den gleichen Bezugsziffern versehen.

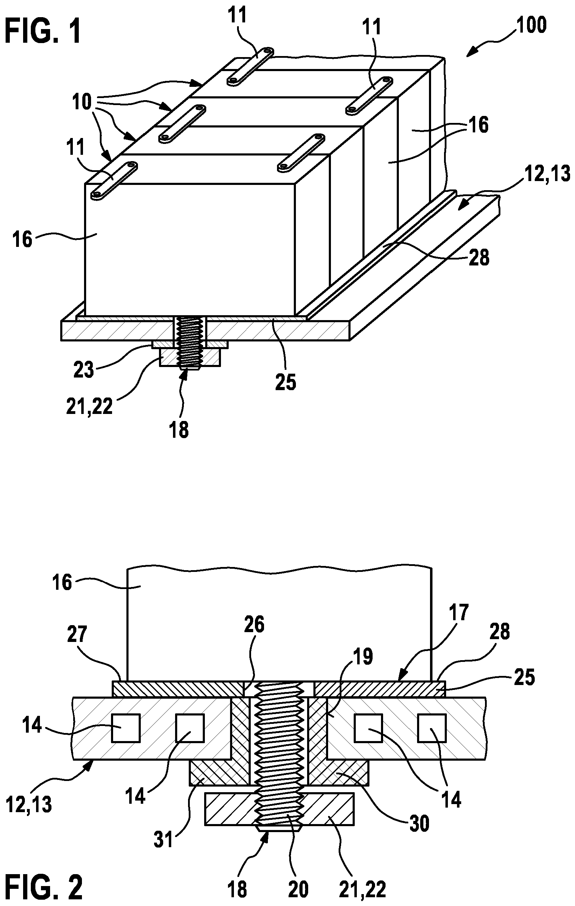

In der Fig. 1 ist eine erste erfindungsgemäße Batteriebaugruppe 100 dargestellt, wie sie insbesondere, jedoch nicht einschränkend, als Bestandteil einer Spannungsversorgung in einem Hybridfahrzeug zur Energieversorgung wenigstens eines elektrischen Antriebsmotors verwendet wird. Die Batteriebaugruppe 100 umfasst eine Vielzahl von üblicherweise identisch ausgebildeten Batteriezellen 10, die je nach Anforderung elektrisch mittels Zellenverbindern 11 in Reihe bzw. parallel geschaltet sind. Selbstverständlich kann es auch vorgesehen sein, dass mehrere Batteriebaugruppen 100 vorgesehen sind, die wiederum elektrisch miteinander verbunden sind. In der Praxis kann die Energieversorgung in einem Hybridfahrzeug beispielsweise aus etwa einhundert miteinander zusammenwirkenden Batteriezellen 10 bestehen.

Um die insbesondere bei der Stromentnahme aus den Batteriezellen 10 entstehende, durch chemische Vorgänge verursachte Verlustwärme von den einzelnen Batteriezellen 10 abzuleiten, um dadurch eine thermische Beschädigung bzw. Überlastung der Batteriezellen 10 zu vermeiden, ist ein Kühlelement 12 in Form einer metallischen Kühlplatte 13 vorgesehen. Die Kühlplatte 13 kann wiederum auf an sich bekannte Art und Weise beispielsweise mit der Karosserie des Kraftfahrzeugs verbunden sein. In der Fig. 2 sind ferner innerhalb der Kühlplatte 13 optional angeordnete Kühlkanäle 14 erkennbar, durch die entweder Kühlluft oder bevorzugt ein flüssiges Kühlmittel geleitet wird.

Um die einzelnen Batteriezellen 10 mit dem Kühlelement 12 bzw. der Kühlplatte 13 zu verbinden, weist das vorzugsweise prismatische Zellengehäuse 16 der Batteriezelle 10 auf der der Kühlplatte 13 zugewandten Unterseite, dem Zellenboden 17, einen stiftförmigen Befestigungsfortsatz 18 auf. Hierzu wird bemerkt, dass das Zellengehäuse 16 bzw. der Befestigungsfortsatz 18 aus Metall bestehen, wobei das Zellengehäuse 16 zusammen mit dem Befestigungsfortsatz 18 beispielsweise durch Fließpressen einstückig hergestellt sind. Die Verbindung zwischen den einzelnen Batteriezellen 10 mit der Kühlplatte 13 dient neben der mechanischen Befestigung der Batteriezellen 10 innerhalb des Kraftfahrzeugs insbesondere auch einem guten Wärmeübergang bzw. einer guten Wärmeübertragung zwischen den Batteriezellen 10 und der Kühlplatte 13. Hierzu ist es erforderlich, dass die Zellengehäuse 16 bzw. die Zellenböden 17 möglichst vollflächig auf der Kühlplatte 13 aufliegen. Dies wird durch Aufbringen einer axialen Spannkraft zwischen den Zellengehäusen 16 und der Kühlplatte 13 ermöglicht. Hierzu weisen die Befestigungsfortsätze 18, die durch entsprechende Durchbrüche 19 in der Kühlplatte 13 hindurchragen, jeweils ein Außengewinde 20 auf, das mit einem als Spannmutter 21 ausgebildeten Spannelement 22 zusammenwirkt. Zwischen der Spannmutter 21 und der Unterseite der Kühlplatte 13 kann noch eine Unterlegscheibe 23 vorgesehen sein.

Neben einer möglichst guten Wärmeübertragung zwischen den Batteriezellen 10 und der Kühlplatte 13 ist zusätzlich eine elektrische Isolierung der Batteriezellen 10 zu dem aus Metall bestehenden Kühlelement 12 erforderlich. Hierzu kann es ggf. vorgesehen sein, dass die Zellengehäuse 16 bzw. die Kühlplatte 13, zumindest auf der den Batteriezellen 10 zugewandten Seite, mit einer entsprechenden Isolationsschicht beschichtet sind. Erfindungsgemäß ist vorgesehen, dass zwischen der Kühlplatte 13 bzw. dem Kühlelement 12 und dem Zellenboden 17 der Batteriezellen 10 ein zusätzliches, erstes Isolierelement 25 angeordnet ist. Das in der Fig. 2 besonders gut erkennbare zusätzliche, erste Isolierelement 25 ist plattenförmig ausgebildet und weist im Bereich des Befestigungsfortsatzes 18 ein Loch 26 auf. Im dargestellten Ausführungsbeispiel überragt das zusätzliche Isolierelement 25 das Zellengehäuse 16 an Randbereichen 27, 28. Das zusätzliche Isolierelement 25 kann entweder der Größe einer einzelnen Batteriezelle 10 angepasst sein oder eine derartige Größe aufweisen, dass alle innerhalb einer Batteriebaugruppe 100 angeordneten Batteriezellen 10 oder einer Teilmenge davon über ein gemeinsames zusätzliches, erstes Isolierelement 25 zur Kühlplatte 13 elektrisch isoliert werden. Das Material des zusätzlichen Isolierelements 25 muss neben den gewünschten elektrischen Isoliereigenschaften darüber hinaus möglichst gut wärmeleitend sein. Hierzu eigenen sich insbesondere gut wärmeleitende Kunststoffe bzw. keramische Materialien für das zusätzliche Isolierelement 25.

Eine besonders gute elektrische Isolierung der Batteriezellen 10 zur Kühlplatte 13 wird dadurch bewirkt, wenn entsprechend der Fig. 2 in dem Öffnungsquerschnitt des Durchbruchs 19 für den Befestigungsfortsatz 18 eine als zweites Isolierelement wirkende Isolierbuchse 30 eingesetzt ist, die den Befestigungsfortsatz 18 an seinem Umfang zum Durchbruch 19 hin elektrisch isoliert. Besonders bevorzugt ist es, wenn die Isolierbuchse 30 auf der der Spannmutter 21 zugewandten Seite einen flanschförmig umlaufenden Rand 31 aufweist, an dem die Spannmutter 21 beim axialen Verspannen der Batteriezelle 10 gegen die Kühlplatte 13 anliegt. Die Isolierbuchse 30 bzw. der Rand 31 ermöglicht es daher, auf eine zusätzliche Unterlegscheibe 23 zu verzichten, wobei durch das vollflächige Anliegen der Spannmutter 21 an dem Rand 31 eine elektrische Isolierung der aus Metall bestehenden Spannmutter 21 zur Kühlplatte 13 ermöglicht wird.

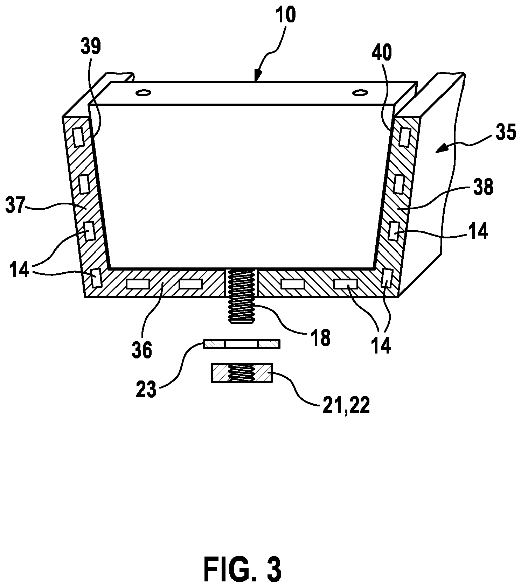

Bei dem in der Fig. 3 dargestellten, abgewandelten Ausführungsbeispiel der Erfindung findet anstelle einer Kühlplatte 13 als Kühlelement 12 ein becher- bzw. wannenförmiges Kühlgehäuse 35 verwendet. Das Kühlgehäuse 35 weist einen ebenen Boden 36 sowie zwei, von dem Boden 36 einstückig nach oben ragende Seitenwände 37, 38 auf. Bevorzugt ist es vorgesehen, dass die Seitenwände 37, 38 gegenüber der Vertikalen leicht schräg angeordnet sind, der Querschnitt des Kühlgehäuses 35 somit konisch ausgebildet ist. Es genügt, wenn die Seitenwände 37, 38 um einen geringen Winkel von beispielsweise 1° bis 5° gegenüber der Vertikalen senkrecht angeordnet sind. In dem Kühlgehäuse 35 sind vorzugsweise nicht nur im Boden 36 Kühlkanäle 14 ausgebildet, sondern auch im Bereich der beiden Seitenwände 37, 38. Ein derart ausgebildetes Kühlgehäuse 35 ermöglicht eine vergrößerte Wärmeübertragungsfläche, da nicht nur der Zellenboden 17 der Batteriezelle 10 in Wirkverbindung mit dem Kühlelement 12 angeordnet ist, sondern auch die Seitenwände 39, 40 der Batteriezelle 10. Das Kühlgehäuse 35 besteht aus elektrisch isolierendem Kunststoff mit einer guten Wärmeleitfähigkeit. Durch die Ausbildung des Kühlgehäuses 35 aus elektrisch gut isolierendem Kunststoff mit entsprechenden Durchbrüchen 19 am Boden 36 für die Befestigungsfortsätze 18 ist es nicht erforderlich, den Befestigungsfortsatz 18 zum Kühlgehäuse 35 hin zusätzlich elektrisch zu isolieren, wie dies mittels der Isolierbuchse 30 ermöglicht wird. Vielmehr kann eine aus Metall bestehende Spannmutter 21 sowie eine aus Metall bestehende Unterlegscheibe 23 verwendet werden.

## Patentansprüche

1. Batteriebaugruppe (100), bestehend aus mehreren miteinander durch an einer Oberseite eines Zellengehäuses (16) angeordneten Zellenverbindern (11) elektrisch verbundenen Batteriezellen (10), wobei jedes Zellengehäuse (16) an einem Zellenboden (17) wenigstens einen Befestigungsfortsatz (18) aufweist, der durch eine Öffnung (19) eines als Kühlplatte (13) oder als Kühlgehäuse (35) für die Zellengehäuse (16) ausgebildeten Kühlelements (12) hindurchragt, wobei der Befestigungsfortsatz (18) mit einem Spannelement (22) zusammenwirkt, das das Zellengehäuse (16) gegen das Kühlelement (12) verspannt, **dadurch gekennzeichnet, dass**
der Zellenboden (17) gegenüber dem Kühlelement (12) zusätzlich elektrisch isoliert ausgebildet ist, wobei
das Kühlelement (12) aus Metall besteht, und wobei der Befestigungsfortsatz (18) und das Spannelement (22) aus Metall bestehen, und dass zwischen dem Befestigungsfortsatz (18) und dem Kühlelement (12) ein zweites Isolierelement, ausgebildet zu einer elektrischen Isolierung zwischen dem Befestigungsfortsatz (18) und dem Kühlelement, angeordnet ist

2. Batteriebaugruppe nach Anspruch 1,
**dadurch gekennzeichnet,**
**dass** zwischen dem Zellenboden (17) und dem Kühlelement (12) ein separates, elektrisch nicht und thermisch gut leitendes erstes Isolierelement (25) angeordnet ist.

3. Batteriebaugruppe nach Anspruch 2,
**dadurch gekennzeichnet,**
**dass** das erste Isolierelement (25) plattenförmig mit wenigstens einem Durchbruch (26) für den Befestigungsfortsatz (18) ausgebildet ist und insbesondere aus Kunststoff oder Keramik besteht.

4. Batteriebaugruppe nach Anspruch 1 bis 3,
**dadurch gekennzeichnet,**
**dass** das zweite Isolierelement als Isolierbuchse (30) ausgebildet ist und einen flanschförmig umlaufenden Rand (31) aufweist, der zwischen dem Kühlelement (12) und dem Spannelement (18) angeordnet ist.

5. Batteriebaugruppe nach Anspruch 1,
**dadurch gekennzeichnet,**
**dass** das Kühlelement als im Querschnitt wannenförmiges Kühlgehäuse (35) ausgebildet ist und/oder aus thermisch gut leitendem Kunststoff besteht.

6. Batteriebaugruppe nach Anspruch 5,
**dadurch gekennzeichnet,**
**dass** das Kühlgehäuse (35) wenigstens eine, vorzugsweise zwei einstückig an einen Boden (36) angeformte Seitenwände (37, 38) aufweist, die an wenigstens einer Seitenwand (39, 40) des Zellengehäuses (16) flächig anliegt.

7. Batteriebaugruppe nach Anspruch 6,
**dadurch gekennzeichnet,**
**dass** zwei Seitenwände (37, 38) vorgesehen sind, und dass das Kühlgehäuse (35) einen konischen Querschnitt aufweist, bei dem die Seitenwände (37, 38) gegenüber der Vertikalen schräg angeordnet sind.

8. Batteriebaugruppe nach einem der Ansprüche 1 bis 7,
**dadurch gekennzeichnet,**
**dass** in dem Kühlelement (12) Kühlkanäle (14) ausgebildet sind.

9. Batteriebaugruppe nach einem der Ansprüche 1 bis 8,
**dadurch gekennzeichnet,**
**dass** der Befestigungsfortsatz (18) ein Außengewinde (20) aufweist, und dass das Spannelement (22) eine Spannmutter (21) ist.

10. Batteriebaugruppe nach einem der Ansprüche 1 bis 9,
**dadurch gekennzeichnet, dass**
das Zellengehäuse (16) und/oder das Kühlelement (12) zusätzlich eine Isolationsschicht aufweisen.

11. Batteriebaugruppe nach einem der Ansprüche 1 bis 10,
**dadurch gekennzeichnet, dass**
die Batteriezellen (10) jeweils ein prismatisches Zellengehäuse (16) aufweisen.

## Claims

1. Battery assembly (100) consisting of a plurality of battery cells (10) which are electrically connected to one another by cell connectors (11) which are arranged on a top side of a cell housing (16), wherein each cell housing (16) has, on a cell base (17), at least one fastening projection (18) which protrudes through an opening (19) of a cooling element (12) which is formed as a cooling plate (13) or as a cooling housing (35) for the cell housings (16), wherein the fastening projection (18) interacts with a clamping element (22) which clamps the cell housing (16) against the cooling element (12),
**characterized in that**
the cell base (17) is designed in a manner additionally electrically insulated from the cooling element (12), wherein
the cooling element (12) consists of metal, and wherein the fastening projection (18) and the clamping element (22) consist of metal, and **in that** a second insulating element, designed to provide electrical insulation between the fastening projection (18) and the cooling element, is arranged between the fastening projection (18) and the cooling element (12).

2. Battery assembly according to Claim 1,
**characterized**
**in that** a separate first insulating element (25), which is electrically non-conductive and thermally highly conductive, is arranged between the cell base (17) and the cooling element (12).

3. Battery assembly according to Claim 2,
**characterized**
**in that** the first insulating element (25) is designed in a plate-like manner with at least one aperture (26) for the fastening projection (18) and in particular consists of plastic or ceramic.

4. Battery assembly according to Claims 1 to 3,
**characterized**
**in that** the second insulating element is designed as an insulating bushing (30) and has a flange-like encircling rim (31) which is arranged between the cooling element (12) and the clamping element (18).

5. Battery assembly according to Claim 1,
**characterized**
**in that** the cooling element is designed as a cooling housing (35) of tub-like cross section and/or consists of thermally highly conductive plastic.

6. Battery assembly according to Claim 5,
**characterized**
**in that** the cooling housing (35) has at least one, preferably two, side walls (37, 38) which are formed in one piece on a base (36) and bear flat against at least one side wall (39, 40) of the cell housing (16).

7. Battery assembly according to Claim 6,
**characterized**
**in that** two side walls (37, 38) are provided, and in that the cooling housing (35) has a conical cross section in the case of which the side walls (37, 38) are arranged in an inclined manner in relation to the vertical.

8. Battery assembly according to one of Claims 1 to 7,
**characterized**
**in that** cooling ducts (14) are formed in the cooling element (12).

9. Battery assembly according to one of Claims 1 to 8,
**characterized**
**in that** the fastening projection (18) has an external thread (20), and
**in that** the clamping element (22) is a clamping nut (21).

10. Battery assembly according to one of Claims 1 to 9,
**characterized**
**in that** the cell housing (16) and/or the cooling element (12) additionally have an insulating layer.

11. Battery assembly according to one of Claims 1 to 10,
**characterized**
**in that** the battery cells (10) each have a prismatic cell housing (16).

## Revendications

1. Ensemble batterie (100), composé de plusieurs cellules de batterie (10) reliées électriquement les unes aux autres par des connecteurs intercellulaires (11) disposés sur une face supérieure d'un boîtier de cellule (16), chaque boîtier de cellule (16) présentant sur un fond de cellule (17) au moins un prolongement de fixation (18) qui fait saillie à travers une ouverture (19) d'un élément de refroidissement (12) réalisé sous la forme d'une plaque de refroidissement (13) ou d'un boîtier de refroidissement (35) pour les boîtiers de cellule (16), le prolongement de fixation (18) coopérant avec un élément de serrage (22) qui assure le serrage du boîtier de cellule (16) contre l'élément de refroidissement (12),
**caractérisé en ce que** le fond de cellule (17) est en outre réalisé avec une isolation électrique par rapport à l'élément de refroidissement (12), dans lequel
l'élément de refroidissement (12) est composé de métal, et le prolongement de fixation (18) et l'élément de serrage (22) sont composés de métal, et
**en ce qu'**un deuxième élément d'isolation, réalisé pour une isolation électrique entre le prolongement de fixation (18) et l'élément de refroidissement, est disposé entre le prolongement de fixation (18) et l'élément de refroidissement (12).

2. Ensemble batterie selon la revendication 1, **caractérisé en ce qu'**un premier élément d'isolation séparé (25), non conducteur électriquement et bon conducteur thermiquement, est disposé entre le fond de cellule (17) et l'élément de refroidissement (12).

3. Ensemble batterie selon la revendication 2, **caractérisé en ce que** le premier élément d'isolation (25) est réalisé en forme de plaque dotée d'au moins un passage (26) pour le prolongement de fixation (18), et est en particulier composé de matière plastique ou de céramique.

4. Ensemble batterie selon les revendications 1 à 3, **caractérisé en ce que** le deuxième élément d'isolation est réalisé sous la forme d'une douille d'isolation (30) et présente un bord périphérique (31) en forme de bride qui est disposé entre l'élément de refroidissement (12) et l'élément de serrage (18).

5. Ensemble batterie selon la revendication 1, **caractérisé en ce que** l'élément de refroidissement est réalisé sous la forme d'un boîtier de refroidissement (35) ayant une forme de cuvette en section transversale, et/ou est composé d'une matière plastique ayant une bonne conductivité thermique.

6. Ensemble batterie selon la revendication 5, **caractérisé en ce que** le boîtier de refroidissement (35) présente au moins une, de préférence deux parois latérales (37, 38) rapportées d'un seul tenant à un fond (36) qui sont appliquées de manière plane contre ladite au moins une paroi latérale (39, 40) du boîtier de cellule (16).

7. Ensemble batterie selon la revendication 6, **caractérisé en ce que** deux parois latérales (37, 38) sont prévues, et **en ce que** le boîtier de refroidissement (35) présente une section transversale conique pour laquelle les parois latérales (37, 38) sont disposées en oblique par rapport à la verticale.

8. Ensemble batterie selon l'une quelconque des revendications 1 à 7, **caractérisé en ce que** des canaux de refroidissement (14) sont réalisés dans l'élément de refroidissement (12).

9. Ensemble batterie selon l'une quelconque des revendications 1 à 8, **caractérisé en ce que** le prolongement de fixation (18) présente un filetage extérieur (20), et **en ce que** l'élément de serrage (22) est un écrou de serrage (21).

10. Ensemble batterie selon l'une quelconque des revendications 1 à 9, **caractérisé en ce que** le boîtier de cellule (16) et/ou l'élément de refroidissement (12) présentent en outre une couche d'isolation.

11. Ensemble batterie selon l'une quelconque des revendications 1 à 10, **caractérisé en ce que** les cellules de batterie (10) présentent respectivement un boîtier de cellule prismatique (16).
